# EUROPÄISCHE PATENTANMELDUNG

(11) **EP 0 718 454 A1**
(43) Veröffentlichungstag der Anmeldung: **26.06.1996**
(21) Anmeldenummer: 95118032.2
(22) Anmeldetag: 16.11.1995
(51) Int. Cl.: E04H 6/00, B62H 3/00

(54) **Parkeinrichtung für Fahrräder**

(30) Priorität: 15.12.1994 DE 9420039 U
(71) Anmelder: EISEN- UND DRAHTWERK ERLAU AKTIENGESELLSCHAFT, D-73431 Aalen (DE)
(72) Erfinder: Müller, Anton, D-73432 Aalen (DE)
(74) Vertreter: Kohl, Karl-Heinz

(57) **Zusammenfassung**

Die Parkeinrichtung (1) dient zum Abstellen von Fahrrädern (8). Sie hat Halter für die Fahrräder (8). Die Parkeinrichtung (1) soll so ausgebildet sein, daß auf kleinstem Raum eine große Zahl von Fahrrädern (8) geparkt werden kann. Hierzu weist die Parkeinrichtung (1) ein Regal (2 bis 5) auf, das über- und nebeneinander liegende Regalfächer für Paletten (7) hat. Die Paletten (7) sind jeweils mit einem Halter versehen. Die Parkeinrichtung (1) weist ein Regalbediengerät (13) auf. Auf den vorhandenen Parkflächen können die Fahrräder (8) nicht nur nebeneinander und hintereinander, sondern auch in mehreren Reihen übereinander geparkt werden. Dadurch kann auf einfache Weise eine Vielzahl von Fahrrädern (8) auf den vorhandenen Parkflächen abgestellt werden. Mit dem Regalbediengerät (13) lassen sich die Paletten (7) in das jeweilige Regalfach transportieren bzw. aus ihm herausholen.

## Beschreibung

Die Erfindung betrifft eine Parkeinrichtung für Fahrräder nach dem Oberbegriff des Anspruches 1.

Zum Parken von Fahrrädern sind als Rohrbügel ausgebildete Halter bekannt, die auf Parkplätzen in Reihen hintereinander und nebeneinander vorgesehen sind. Um viele Fahrräder parken zu können, ist ein großflächiger Parkplatz erforderlich. Häufig stehen solche großen Parkplatzflächen zum Beispiel bei Schulen, Schwimmbädern, Bahnhöfen und dergleichen nicht zur Verfügung.

Der Erfindung liegt die Aufgabe zugrunde, eine Parkeinrichtung zu schaffen, die auf kleinstem Raum eine große Zahl von Fahrrädern aufnehmen kann.

Diese Aufgabe wird bei einer Parkeinrichtung der gattungsbildenden Art erfindungsgemäß mit den kennzeichnenden Merkmalen des Anspruches 1 gelöst.

Infolge der erfindungsgemäßen Ausbildung können auf den vorhandenen Parkflächen die Fahrräder nicht nur nebeneinander und hintereinander, sondern auch in mehreren Reihen übereinander geparkt werden. Dadurch kann auf einfache Weise eine Vielzahl von Fahrrädern auf den vorhandenen Parkflächen abgestellt werden. Die Parkflächen können somit optimal ausgenutzt werden. Mit dem Regalbediengerät lassen sich die Paletten, auf denen die Fahrräder vom Benutzer abgestellt werden, in das jeweilige Regalfach transportieren bzw. aus ihm holen. An den auf den Paletten vorgesehenen Haltern lassen sich die Fahrräder einfach und zuverlässig sichern.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: in perspektivischer Darstellung eine erfindungsgemäße Parkeinrichtung für Fahrräder, die als Parkhaus ausgebildet ist,
- Fig. 2: die Parkeinrichtung nach Fig. 1 teilweise in Ansicht gemäß Pfeil II in Fig. 1 und teilweise im Schnitt,
- Fig. 3: ein Regal der Parkeinrichtung in Frontansicht,
- Fig. 4: in schematischer Darstellung und in Draufsicht mehrere Regale gemäß Fig. 3, wie sie in der Parkeinrichtung nach Fig. 1 angeordnet sind,
- Fig. 5: eine Palette der Parkeinrichtung nach Fig. 1 zum Abstellen eines Fahrrades, in perspektivischer Darstellung,
- Fig. 6: die Palette nach Fig. 5 in Draufsicht,
- Fig. 7: die Palette nach Fig. 5 in Seitenansicht gemäß Pfeil VII in Fig. 5,
- Fig. 8: die Palette nach Fig. 5 in Stirnansicht gemäß Pfeil VIII.

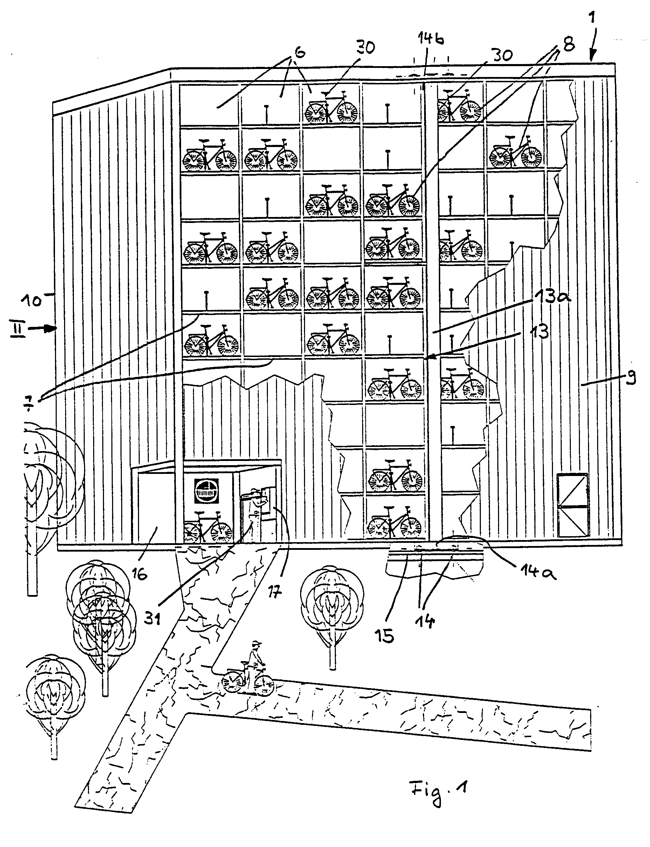

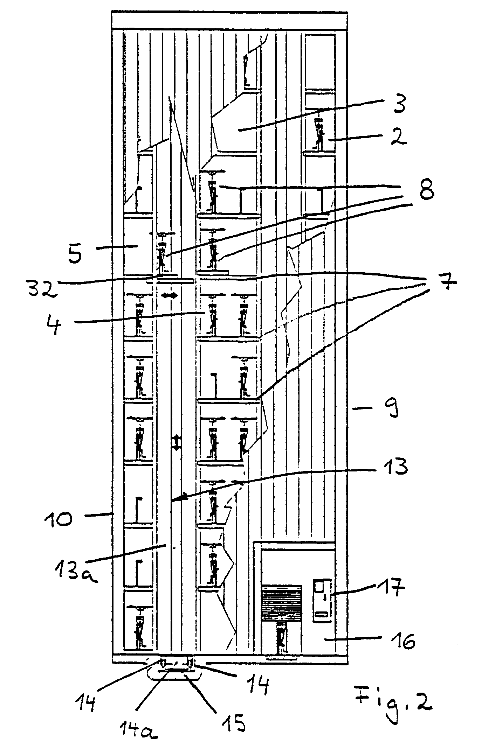

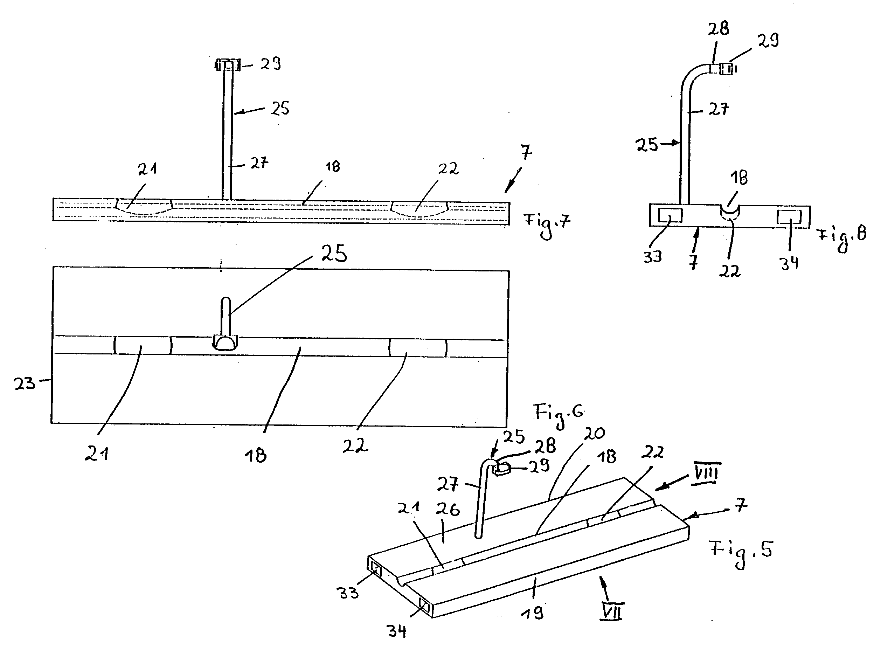

Die dargestellte Parkeinrichtung 1 ist nach Art eines Parkhauses mit darin angeordneten Hochregalen 2 bis 5 (Fig. 2 bis 4) ausgebildet. In den Regalfächern 6 sind Paletten 7 eingesetzt, auf denen Fahrräder 8 geparkt werden können. Die Paletten 7 werden anhand der Fig. 5 bis 8 noch näher erläutert. Wie Fig. 4 zeigt, sind im dargestellten Parkhaus 1 vier Palettenhochregale 2 bis 5 untergebracht. Sie sind so angeordnet, daß an den beiden Außenseiten 9 und 10 (Fig. 1, 2) des Parkhauses 1 jeweils ein Regal 2 und 5 steht, während in der Mitte des Parkhauses zwei weitere aneinanderstehende Regale 3 und 4 vorgesehen sind. Zwischen den Regalen 2 und 3 und den Regalen 4 und 5 sind jeweils Gänge 11 und 12 gebildet, die jeweils mit einem Regalbediengerät 13 befahrbar sind. Das Regalbediengerät ist beispielsweise ein Regalstapelgerät, ein Gabelstapler, ein Stapelkran und dergleichen, mit dem die Paletten 7 in die Regalfächer 6 eingelagert bzw. ihnen entnommen werden können. Als Bediengerät kommen aber auch andere bekannte Regalförderzeuge in Betracht.

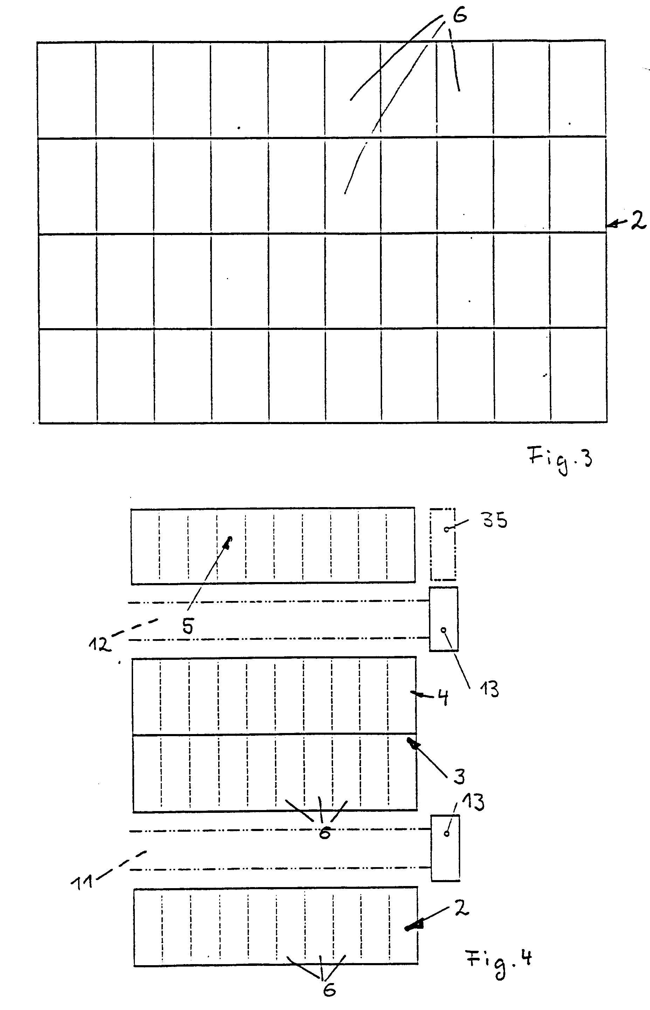

Das Regalbediengerät 13 ist mit Rollen 14 in einem im Boden der Regalgänge 11 und 12 versenkt angeordneten Verfahrschacht 15 verfahrbar. Wie sich aus den Fig. 1 und 2 ergibt, sind die Rollen 14 an einem Laufwagen 14a vorgesehen, der im Verfahrschacht 15 angeordnet ist. Der Laufwagen 14a ist am unteren Ende eines Ständers 13a angeordnet, der am oberen Ende über einen oberen Laufwagen 14b geführt wird. Er läuft auf oberen (nicht dargestellten) Schienen, die in Höhe des jeweiligen Ganges (11, 12) vorgesehen sind. Auch für die Rollen 14 des unteren Laufwagens 14a sind im Verfahrschacht 15 (nicht dargestellte) Schienen angeordnet. Am Ständer 13a ist eine Plattform 32 (Fig. 2) in Höhenrichtung verfahrbar. Wie sich aus Fig. 3 ergibt, haben die Regale 2 bis 5 neben- und übereinander liegende Regalfächer 6, in denen die Paletten 7 abgelegt werden. Jedes Fach 6 hat eine Höhe von vorzugsweise 1,25 m und eine Breite von 0,75 m, so daß die auf den Paletten 7 abgestellten Fahrräder 8 bequem untergebracht werden können. Die Regallänge beträgt vorzugsweise 7,5 m und die Regalhöhe 5 m. Die Regale 3 und 4 stehen unmittelbar aneinander. In den Regalen 2 bis 5 kann eine Vielzahl von Fahrrädern 8 auf kleinstem Raum untergebracht werden.

Die Paletten 7 haben rechteckigen Umriß und sind vorteilhaft an die Länge und Breite des Regalfaches 6 angepaßt. Um das Fahrrad 8 mit seinen Rädern gegenüber der Palette 7 auszurichten, weist diese eine Parkrinne 18 auf. Sie läuft parallel zu den Palettenlängsrändern 19 und 20 in halber Breite der Palette (Fig. 5 und 6). Die Rinnenbreite ist geringfügig breiter als die Breite der Fahrradreifen, so daß das Fahrrad bequem in die Rinne eingefahren werden kann. In der Rinne 18 sind mit Abstand hintereinander zwei Vertiefungen 21 und 22 vorgesehen, in die die Fahrradreifen in Parkstellung des Fahrrades 8 eingreifen. Der Abstand der Vertiefungen 21 und 22 voneinander entspricht daher dem Abstand der Fahrradreifen voneinander. Von den Schmalseiten 23 und 24 der Paletten haben die Vertiefungen 21 und 22 jeweils gleichen Abstand. Die Länge und Breite der Palette ist so gewählt, daß das Fahrrad, in Draufsicht gesehen, seitlich und in Längsrichtung nicht über die Palette ragt.

Zur Arretierung des Fahrrades 8 in seiner Parkstellung ist auf der Palette ein Halter 25 vorgesehen. Er hat einen L-förmig gebogenen Ständer, der im Bereich neben der Parkrinne 18 in dem einen Palettenteil 26 etwa in dessen halber Breite (Fig. 5 und 8) liegt. In Seitenansicht gemäß Fig. 7 gesehen, liegt der Halter 25 näher bei der Vertiefung 21. Der Halter 25 ist mit seinem längeren Schenkel 27 in der Palette stehend verankert. Am freien Ende des abgebogenen kürzeren Schenkels 28 ist ein Klemmstück 29 mit federelastisch aufweitbaren Klemmschenkeln vorgesehen, die eine Aufnahmeöffnung für eine Sattelstange 30 (Fig. 1) des Fahrrades 8 begrenzen. Die Sattelstange wird zur Arretierung des Fahrrades in die Aufnahmeöffnung eingeschnappt, wodurch das Fahrrad 8 einwandfrei klemmend gehalten wird. Zur Sicherung kann am Halter 25, insbesondere am Klemmstück 29, ein zusätzliches Sicherungsteil, wie eine Kette, ein Drahtseil und dergleichen, vorgesehen sein, die um die Sattelstange oder ein anderes Fahrradteil geschlungen wird.

Damit die Palette 7 auch von einem Gabelstapler als Regalbediengerät aufgenommen werden kann, ist sie mit zwei in ihrer Längsrichtung verlaufenden Öffnungen 33 und 34 (Fig. 5 und 8) versehen, in die die Arme des Gabelstaplers zum Transport der Palette 7 eingreifen können.

Die auf den Paletten 7 abgestellten Fahrräder 8 werden vollautomatisch in ein freies Regalfach 6 gefördert und von dort auch wieder geholt. Die Regalbediengeräte 13 sind an eine Programmsteuerung angeschlossen. Sie hat wenigstens ein Lesegerät 17 in einem Parkhauseingang 16 (Fig. 1). Mit dem Lesegerät 17 können beispielsweise Magnetkarten gelesen werden, die vom Benutzer des Fahrrades 8 in einen Leseschlitz des Lesegerätes 17 gesteckt werden. Die Magnetkarten können als Tages-, Wochen- oder Monatskarten gekauft werden.

Der Benutzer 31 steckt zunächst seine Magnetkarte in den Schlitz des Lesegerätes 17. Die Steuerung hat einen Speicher, in dem alle Regalfächer 6 und ihr Beladezustand erfaßt sind. Nach dem Stecken der Magnetkarte wird ein freies Regalfach 6 ausgesucht. Das jeweilige Regalbediengerät 13 erhält ein entsprechendes Signal. Der Ständer 13a fährt an die entsprechende Regalreihe. Anschließend oder auch schon während des Verfahrens wird die Plattform 32 längs des Ständers 13a in die richtige Höhe gefahren, so daß sie dem ausgewählten Regalfach 6 gegenüberliegt. Nunmehr wird über die Computersteuerung die in diesem Regalfach 6 befindliche Palette 7 auf die Plattform 32 gefördert. Die Regalfächer 6 und die Plattform 32 können hierzu entsprechende Transporteinrichtungen, wie beispielsweise angetriebene Rollen, aufweisen, mit denen die jeweilige Palette 7 transportiert wird. Die Transporteinrichtungen werden ebenfalls durch die Computersteuerung angetrieben.

Sobald die ausgewählte Palette 7 sich auf der Plattform 32 befindet, erhält die Computersteuerung ein Signal, wodurch die Transporteinrichtung abgeschaltet wird. Dann wird das Regalbediengerät 13, gesteuert über die Steuerung, zum Parkhauseingang 16 gefahren. Vorteilhaft wird während dieser Fahrt die Plattform 32, wenn sie sich nicht in der untersten Stellung am Ständer 13a befindet, nach unten gefahren. Der Bediener 31 kann nunmehr sein Fahrrad 8 in der beschriebenen Weise auf der Palette 7 abstellen und sichern. Dann wird die Palette 7 mit dem Fahrrad 8, gesteuert durch die Computersteuerung, wieder zurück in das Regalfach 6 transportiert.

Will der Bediener 31 sein Fahrrad 8 abholen, steckt er seine Magnetkarte in das Lesegerät 17. Anhand der auf der Magnetkarte abgespeicherten Daten wird der Computersteuerung mitgeteilt, in welchem Regalfach 6 das Fahrrad 8 geparkt worden ist. Das Regalbediengerät 13 holt dann computergesteuert die Palette 7 mit dem Fahrrad aus dem Regalfach 6 und transportiert sie zum Parkhauseingang 16. Der Benutzer 31 kann das Fahrrad 8 entnehmen. Die leere Palette 7 wird in der beschriebenen Weise wieder zurück in das Regalfach 6 transportiert.

Anstelle der beschriebenen Magnetkarte können auch andere geeignete Karten, beispielsweise Strichcode-Karten, verwendet werden.

Damit auf den Paletten 7 keine die Abmessungen der Regalfächer 6 überschreitenden Fahrräder 8 abgestellt werden, sind vorteilhaft Lichtschranken vorgesehen, die vom Fahrrad 8 durchfahren werden müssen, bevor es auf der Palette 7 abgestellt werden kann. Ist das Fahrrad 8 zu groß, wird ein entsprechendes Signal erzeugt. So kann dem Benutzer 31 ein Hinweis gegeben werden, daß das Fahrrad 8 nicht auf der Palette 7 abgestellt werden darf. Zuverlässiger ist es jedoch, das Signal der Computersteuerung zuzuleiten, die dann das Regalbediengerät 13 nicht transportiert.

Bei dem beschriebenen Fahrrad-Parkhaus 1 ist die Ein- und Ausfahrt für die Fahrräder 8 vorzugsweise getrennt, so daß ein reibungsloser Ablauf sichergestellt wird.

In Fig. 4 ist die Möglichkeit angedeutet, die Paletten 7 nicht in den einzelnen Regalfächern 6 zu lagern, sondern zu Palettentürmen 35 zu stapeln. Jedem Regalbediengerät 13 ist ein solcher Palettenturm 35 zugeordnet. Er wird im Bereich außerhalb der Gänge 11, 12 vorgesehen.

Das Regalbediengerät 13 fährt zunächst zum Palettenturm 35 und entnimmt mit seiner Plattform 31 die oberste Palette 7. Die Plattform 31 hat in diesem Fall beispielsweise ausfahrbare Arme, die in die Öffnungen 33, 34 der Palette 7 einfahren und sie, wie bei Gabelstaplern bekannt, vom Palettenturm 35 abnehmen. Dann wird das Regalbediengerät 13 in der beschriebenen Weise zum Parkhauseingang 16 gefahren. Der Benutzer 31 stellt sein Fahrrad 8 auf der Palette 7 ab, die computergesteuert mit dem Regalbediengerät 13 in ein freies Regalfach 6 gefahren wird.

Im Parkhaus 1 läßt sich auf kleinstem Raum eine Vielzahl von Fahrrädern unterbringen. Die Eingabe und Herausgabe der Fahrräder 8 erfolgt automatisch. Der Benutzer 31 muß nicht selbst zum jeweiligen Regalfach 6 gehen. Darum sind keine Fußwege im Parkhaus 1 erforderlich, so daß es kompakt gebaut werden kann.

## Patentansprüche

1. Parkeinrichtung für Fahrräder, mit mindestens einem Halter für das Fahrrad,
dadurch gekennzeichnet, daß die Parkeinrichtung (1) mindestens ein Regal (2 bis 5) aufweist, das über- und nebeneinander liegende Regalfächer (6) für Paletten (7) hat, die jeweils mit einem Halter (25) versehen sind, und daß die Parkeinrichtung (1) mindestens ein Regalbediengerät (13) aufweist.

2. Parkeinrichtung nach Anspruch 1,
dadurch gekennzeichnet, daß das Regalbediengerät (13) an eine Steuerung angeschlossen ist.

3. Parkeinrichtung nach Anspruch 2,
dadurch gekennzeichnet, daß die Steuerung an einen Zentralrechner angeschlossen ist.

4. Parkeinrichtung nach einem der Ansprüche 1 bis 3,
dadurch gekennzeichnet, daß das Regalbediengerät (13) auf Schienen in einem Schacht (15) verfahrbar ist.

5. Parkeinrichtung nach einem der Ansprüche 1 bis 4,
dadurch gekennzeichnet, daß an den Zentralrechner wenigstens eine Eingabeeinheit (17), vorzugsweise ein Karten-Lesegerät, angeschlossen ist.

6. Parkeinrichtung nach einem der Ansprüche 1 bis 5,
dadurch gekennzeichnet, daß die Palette (7) eine Führungsrinne (18) für die Räder des Fahrrades (8) aufweist.

7. Parkeinrichtung nach Anspruch 6,
dadurch gekennzeichnet, daß die Führungsrinne (18) in Längsrichtung der Palette (7) verläuft.

8. Parkeinrichtung nach Anspruch 6 oder 7,
dadurch gekennzeichnet, daß die Führungsrinne (18) in halber Breite der Palette (7) liegt.

9. Parkeinrichtung nach einem der Ansprüche 6 bis 8,
dadurch gekennzeichnet, daß in der Führungsrinne (18) mindestens eine, vorzugsweise zwei, mit einem dem Abstand der Räder des Fahrrades (8) entsprechenden Abstand voneinander liegende Vertiefungen (21, 22) vorgesehen sind.

10. Parkeinrichtung nach einem der Ansprüche 6 bis 9,
dadurch gekennzeichnet, daß mit Abstand neben der Führungsrinne (18) der Halter (25) für das Fahrrad (8) angeordnet ist.

11. Parkeinrichtung nach einem der Ansprüche 1 bis 10,
dadurch gekennzeichnet, daß der Halter (25) ein Bügel mit einer Klemmaufnahme (29) für eine Fahrradstange ist.

12. Parkeinrichtung nach einem der Ansprüche 1 bis 11,
dadurch gekennzeichnet, daß am Halter (25) ein Sicherungsteil, wie eine Kette, ein Drahtseil oder dergleichen, zum Umschlingen eines Fahrradteiles vorgesehen ist.

13. Parkeinrichtung nach einem der Ansprüche 1 bis 12,
dadurch gekennzeichnet, daß in den Regalfächern (6) Transporteinrichtungen für die Paletten (7) vorgesehen sind.

14. Parkeinrichtung nach Anspruch 13,
dadurch gekennzeichnet, daß die Transporteinrichtungen an die Steuerung angeschlossen sind.
